# EUROPEAN PATENT APPLICATION

(11) **EP 1 521 251 A2**
(43) Date of publication of application: **06.04.2005**
(21) Application number: 04023073.2
(22) Date of filing: 28.09.2004
(51) Int. Cl.: G11B 7/26, B29D 17/00

(54) **Method of manufacturing disc-shaped recording medium**

(30) Priority: 01.10.2003 JP 2003343125
(71) Applicant: TDK Corporation, Chuo-ku, Tokyo 103-8272 (JP)
(72) Inventor: Komaki, Tsuyoshi, Tokyo 103-8272 (JP); Yamada, Takashi, Tokyo 103-8272 (JP); Yamatsu, Shigeru, Tokyo 103-8272 (JP)
(74) Representative: HOFFMANN - EITLE

(57) **Abstract**

Disclosed is a disc-shaped recording medium manufacturing method capable of restraining, when manufacturing a disc-shaped recording medium having a two or more information layers, an occurrence of unevenness of a film thickness of a spacer layer interposed between recording faces thereof and thus forming the spacer layer exhibiting high uniformity of the film thickness. The disc-shaped recording medium manufacturing method includes coating an energy beam curing resin over an inner peripheral portion of a first information layer formed on a disc-shaped substrate (11), and thereafter disposing a stamper member having a transfer face so that the stamper member faces the disc-shaped substrate (11), rotating the disc-shaped substrate (11) in order to spin-coat the energy beam curing resin between the disc-shaped substrate (11) and the stamper member, irradiating the energy beam curing resin with an energy beam while rotating the disc-shaped substrate (11) so as to expand an irradiation range toward an outer peripheral side from an inner peripheral side of the disc-shaped substrate (11), removing the stamper member in a way that leaves, on the disc-shaped substrate (11), a spacer layer (13a) made of the energy beam curing resin, forming a second information layer on the surface of the spacer layer (13a) transferred from the transfer face of the stamper member, and forming a light transmissive layer (16) on the second information layer on the spacer layer (13a), wherein the energy beam irradiating step involves keeping the number of revolutions with which the energy beam curing resin comes to have a predetermined film thickness on the inner peripheral side on the disc-shaped substrate (11), then starting the irradiation of the energy beam, and thereafter changing stepwise the number of revolutions and the irradiation range.

## Description

### BACKGROUND OF THE INVENTION

### Field of the Invention

The present invention relates to a method of manufacturing a disc-shaped recording medium having single-sided two or more information layers.

### Description of the Prior Art

DVD-9 exists as a conventional single-sided 2-layered optical disc, and there is known a disc, wherein information layers are formed on both sides of a spacer layer as disclosed in, e.g., Japanese Patent Application Post-Exam Publication No.8-23941. A recording/reproducing system of the DVD has a numerical aperture given by NA = 0.6, and hence a film (layer) thickness distribution of the spacer layer of the single-sided 2-layered optical disc exhibits a margin that is as remarkably large as 55±15 µm in comparison of the film thickness distribution. Therefore, as disclosed in Japanese Patent Application Laid-Open Publication No.9-161329, a stamper for forming an information face is superimposed on a substrate structuring an optical recording medium with an ultraviolet curing liquid bonding agent interposed therebetween, and the liquid bonding agent may simply be, after being spun off (an outer peripheral edge), cured by irradiation of the ultraviolet rays. According to this conventional method, when forming a spacer layer that is, e.g., 25 µm in thickness, an average thickness of an inner peripheral portion is on the order of 22 µm, and an average thickness of an outer peripheral portion is 29 µm, with the result that the film thickness distribution becomes 7 µm.

In Blu-ray disc that has recently been utilized, the recording/reproducing system has a large numerical aperture such as NA = 0.85, and it is therefore required that a substrate thickness be 100±2 µm for acquiring the same mechanical characteristics as the DVD has. Further, in the case of a 2-layered type Blu-ray disc, the film thickness distribution of a light transmissive layer ranging from a light incidence face down to the information layer on a deeper side, is required to be within ±2 µm. Besides, a film thickness distribution of the light transmissive layer down to the information layer on the deeper side plus a spacer layer is likewise required to be within ±2 µm. Hence, excellent uniformity is demanded of each of the light transmissive layer and the spacer layer.

Moreover, the manufacture of the Blu-ray disc needs to control the film thickness distribution that is by far more precise than the conventional DVD-9. In the Blu-ray disc including single-sided two or more information layers, if there occurs unevenness of the film (layer) thickness of the spacer layer interposed between the two information layers, this unevenness affects the recording/reproducing or the reproducing alone, and hence the excellent uniformity of the film thickness is demanded of the spacer layer of the Blu-ray disc including the single-sided two or more information layers.

On the other hand, Japanese Patent Application Laid-Open Publication No.9-161333 discloses that for forming the light transmissive layer of the optical disc at high accuracy in a short period of time, the liquid ultraviolet curing resin is discharged as droplets over the vicinity of the central portion of the disc-shaped substrate while rotating the disc-shaped substrate, the ultraviolet curing resin is spread throughout from the central side up to the outer peripheral side thereof by dint of a centrifugal force, and the ultraviolet curing resin that has been spread throughout from the central side up to the outer peripheral side is irradiated with spot ultraviolet rays from the central side toward the outer peripheral side of the rotating substrate, thus curing the ultraviolet curing resin to a predetermined thickness sequentially from the central side toward the outer peripheral side. There are disclosed, however, none of specific methods of how the resin is cured to the predetermined thickness.

Further, Japanese Patent Application Laid-Open Publication No.11-73691 discloses that for uniformizing the thickness of the light transmissive layer of the optical disc throughout the surface of the substrate, after spin-coating a light curing resin, a swelling of the light curing resin that is produced at an outermost peripheral portion of the disc-shaped substrate is covered with a mask so as not to be irradiated with the light, the light curing resin excluding the resin swelling is irradiated with the light and is thus cured, the light curing resin at the resin swelling is removed away by rotating the substrate once again, and the light curing resin left after being removed away is irradiated with the light and is thus cured. This method is a measure against the swelling of the light curing resin at the outermost peripheral portion but does not show any contrivance for ensuring the uniformity of the thickness throughout the surface from the inner periphery to the outer periphery.

### SUMMARY OF THE INVENTION

It is an object of the present invention to provide a disc-shaped recording medium manufacturing method capable of restraining, when manufacturing a disc-shaped recording medium having a two or more information layers, an occurrence of unevenness of a film thickness of a spacer layer interposed between these inflation layers and thus forming the spacer layer exhibiting high uniformity of the film thickness.

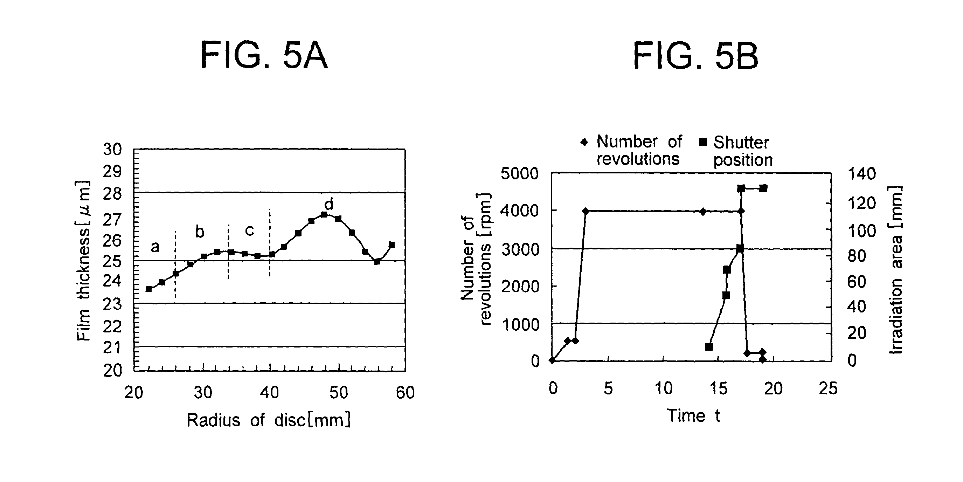

To accomplish the above object, the present inventors acquired the following knowledge as a result of concentrated studies. Namely, a film thickness of an ultraviolet curing resin that is formed by spin-coating basically tends to be small at an inner periphery but large at an outer periphery. If a resin spinning-off time is set long, the film thickness becomes gradually small as it holds a gradient from the inner periphery toward the outer periphery. Accordingly, as partially viewed from the inner periphery toward the outer periphery, there exist time-spans defined by 25 µm at the inner periphery, 25 µm at the intermediate periphery and 25 µm at the outer periphery. Hence, when the film thickness of the ultraviolet curing resin comes to 25 µm at the inner periphery, only the inner periphery is irradiated with the ultraviolet rays and is thus cured. Next, when becoming 25 µm at the intermediate periphery, the intermediate periphery is irradiated with the ultraviolet rays and is thus cured, and sequentially the outer periphery is likewise cured. FIGS. 5A and 5B show results of these curing processes.

To be specific, as shown in FIG. 5B, the irradiation of the ultraviolet rays is effected in a way that takes a timing while expanding an irradiation range of an ultraviolet light source from the inner periphery toward the outer periphery at a high speed by increasing the number of revolutions, whereby a film thickness distribution of a spacer layer as shown in FIG. 5A can be obtained. The film thickness distribution is, though within about ±2 µm, hard to be within ±2 µm after laminating one more layer.

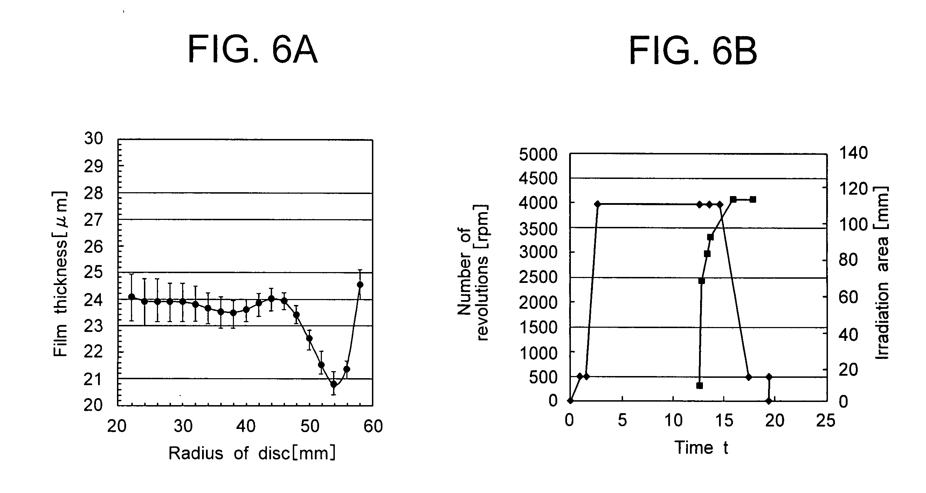

Such being the case, the spin-coating is performed with a pattern shown in FIG. 6B, and the ultraviolet curing is conducted, wherein as seen in a range d in FIG. 5A, a portion exhibiting an increase in the film thickness and then a change thereof, the film thickness is decreased by slowing down the irradiation of the ultraviolet rays, similarly as seen in ranges b and c, comparatively a flat portion is promptly cured so as not to become thin, and, as seen in a range a, a thin portion is likewise promptly cured so as not to become much thinner.

As a result, a film thickness distribution as shown in FIG. 6A can be acquired, wherein it is possible to obtain the uniformity of the film thickness distribution that is as highly accurate as ±1 µm from 22 mm in inner periphery up to 48 mm in radius, however, the film thickness becomes small at the outer periphery. It is considered that this decrease in film thickness at the outer periphery is derived from no supply of the resin of which fluidity gets vanished due to the resin curing advancing from the inner peripheral portion. It is therefore required for restraining the decrease in thickness at the outer periphery to prevent the centrifugal force from acting by reducing the number of revolutions when spinning the resin away. Hence, it is necessary to extremely reducing the number of revolutions at the portion where the film thickness decreases and at the same time to promptly cure the resin.

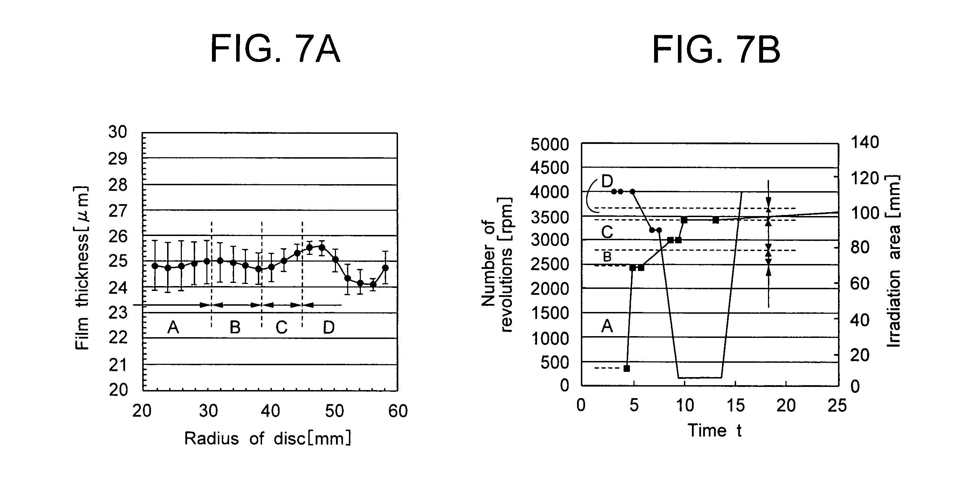

Based on this concept, the spin-coating is performed with such a pattern shown in FIG. 7B that the number of revolutions is considerably reduced at the outer periphery having a radius of approximately 40 mm or larger, and then the ultraviolet curing is conducted. As a result, a film thickness distribution as shown in FIG. 7A is acquired, and it proves that it is possible to form a spacer layer of which the film thickness distribution is as uniform as 25±1 µm from the inner periphery to the outer periphery.

A method of manufacturing a disc-shaped recording medium according to the present embodiment was devised based on the knowledge acquired by the present inventors. Namely, a first method of manufacturing a disc-shaped recording medium according to the present embodiment includes a step of applying an energy beam curing resin to an inner peripheral portion of a first information layer formed on a disc-shaped substrate, and thereafter disposing a stamper member having a transfer face so that the stamper member faces the disc-shaped substrate, a step of rotating the disc-shaped substrate in order to spin-coat the energy beam curing resin between the disc-shaped substrate and the stamper member, a step of irradiating the energy beam curing resin with an energy beam while rotating the disc-shaped substrate so as to expand an irradiation range toward an outer peripheral side from an inner peripheral side of the disc-shaped substrate, a step of removing the stamper member in a way that leaves, on the disc-shaped substrate, a spacer layer made of the energy beam curing resin with the irradiation of the energy beam, a step of forming a second information layer on the surface of the spacer layer transferred from the transfer face of the stamper member, and a step of forming a light transmissive layer on the second information layer on the spacer layer, wherein the energy beam irradiating step involves keeping the number of revolutions with which the energy beam curing resin comes to have a predetermined film thickness on the inner peripheral side on the disc-shaped substrate, then starting the irradiation of the energy beam, and thereafter changing stepwise the number of revolutions and the irradiation range.

According to the first method of manufacturing the disc-shaped recording medium, when spin-coating and irradiating the energy beam curing resin with the energy beam, the predetermined film thickness is obtained by keeping the number of revolutions with which the energy beam curing resin comes to have the predetermined film thickness on the inner peripheral side on the disc-shaped substrate, then the irradiation of the energy beam is started, and thereafter the number of revolutions and the irradiation range are changed stepwise. This enables the spacer layer exhibiting high uniformity of the film thickness to be formed by restraining an occurrence of unevenness of the film thickness of the spacer layer formed by curing the energy beam curing resin.

A second method of manufacturing a disc-shaped recording medium according to the present embodiment includes a first step of applying an energy beam curing resin to an inner peripheral portion of a first information layer formed on a disc-shaped substrate, and thereafter disposing a stamper member having a transfer face so that the stamper member faces the disc-shaped substrate, a second step of rotating the disc-shaped substrate in order to spin-coat the energy beam curing resin between the disc-shaped substrate and the stamper member, a third step of irradiating the energy beam curing resin with an energy beam while rotating the disc-shaped substrate so as to expand an irradiation range toward an outer peripheral side from an inner peripheral side of the disc-shaped substrate, a fourth step of removing the stamper member in a way that leaves, on the disc-shaped substrate, a spacer layer made of the energy beam curing resin with the irradiation of the energy beam, and a fifth step of forming a second information layer on the surface of the spacer layer transferred from the transfer face of the stamper member, wherein three or more information layers are formed by repeatedly executing the first step through the fifth step so that a second spacer layer is formed of the energy beam curing resin between the first spacer layer transferred from the transfer face of the first stamper member and a second stamper member, and the energy beam irradiating step involves keeping the number of revolutions with which the energy beam curing resin comes to have a predetermined film thickness on the inner peripheral side on the disc-shaped substrate, then starting the irradiation of the energy beam, and thereafter changing stepwise the number of revolutions and the irradiation range.

According to the second method of manufacturing the disc-shaped recording medium, when spin-coating and irradiating the energy beam curing resin with the energy beam, the predetermined film thickness is obtained by keeping the number of revolutions with which the energy beam curing resin comes to have the predetermined film thickness on the inner peripheral side on the disc-shaped substrate, then the irradiation of the energy beam is started, and thereafter the number of revolutions and the irradiation range are changed stepwise. This enables the spacer layer exhibiting high uniformity of the film thickness to be formed by restraining an occurrence of unevenness of the film thickness of the spacer layer formed by curing the energy beam curing resin.

In the second method of manufacturing the disc-shaped recording medium, an information layer is formed on the surface of the spacer layer formed on an outermost side, and thereafter a light transmissive layer can be formed on the information layer.

In the first and second methods of manufacturing the disc-shaped recording medium, it is preferable that the energy beam irradiating step involves keeping the number of revolutions with which the energy beam curing resin comes to have a predetermined film thickness on the inner peripheral side on the disc-shaped substrate, then starting the irradiation of the energy beam, and increasing the number of revolutions after temporarily decreasing the kept number of revolutions while changing the irradiation range of the energy beam.

Further, it is preferable that a relationship between the number of revolutions and the film thickness of the energy beam curing resin in a radial direction which is irradiated with the energy beam, is previously obtained, and the number of revolutions in the irradiation range in the radial direction is changed based on this relationship.
Moreover, it is preferable that the number of revolutions is decreased when the irradiation range in the radial direction exists on an outer peripheral side. It is also preferable the number of revolutions is decreased when the irradiation range in the radial direction exists on an outer peripheral side, and is thereafter increased again.

According to the method of manufacturing the disc-shaped recording medium in the present embodiment, when manufacturing the disc-shaped recording medium having two or three or more information layers, it is feasible to form the spacer layer exhibiting the high uniformity of the film thickness by restraining the occurrence of the unevenness of the film thickness of the spacer layer interposed between these information layers.

### BRIEF DESCRIPTION OF THE DRAWINGS

FIGS. 1A to 1C are side sectional views each showing a process of manufacturing a 2-layered optical disc in the present embodiment;
FIGS. 2A to 2D are side sectional views showing processes of manufacturing the 2-layered optical disc, which are executed subsequently to the process in FIG. 1C;
FIGS. 3A to 3F are side sectional views showing processes of manufacturing the 2-layered optical disc, which are executed subsequently to the process in FIG. 2D;
FIG. 4A is a plan view showing a variation of a diaphragm aperture of a diaphragm mechanism provided in an ultraviolet light source in FIG. 2B; FIG. 4B is a plan view showing irradiation ranges of ultraviolet rays emitted via respective diaphragm apertures of the diaphragm mechanism;
FIG. 5A is a graph showing a film thickness distribution of the spacer layer acquired in an experiment in the course of reaching the present invention; FIG. 5B is a graph showing the number of revolutions and patterns of irradiation ranges;
FIG. 6A is a graph showing the film thickness distribution of the spacer layer acquired in a different experiment in the course of reaching the present invention; FIG. 6B is a graph showing the number of revolutions and the patterns of the irradiation ranges;
FIG. 7A is a graph showing a film thickness distribution of a spacer layer in the present embodiment; FIG. 7B is a graph showing the number of revolutions and patterns of irradiation ranges; and
FIG. 8 is a side sectional view showing an optical disc including three recording faces in the present embodiment.

### DETAILED DESCRIPTION OF THE PREFERRED EMBODIMENTS

A best mode for carrying out the present invention will hereinafter be described with reference to the drawings.

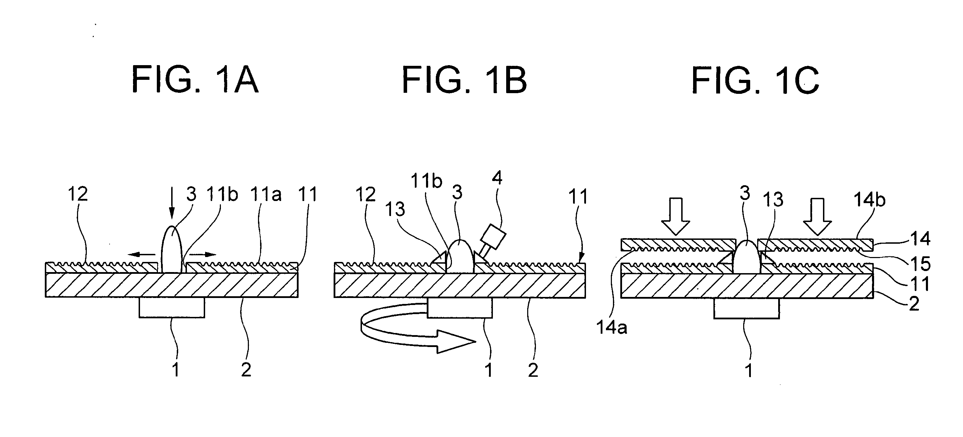

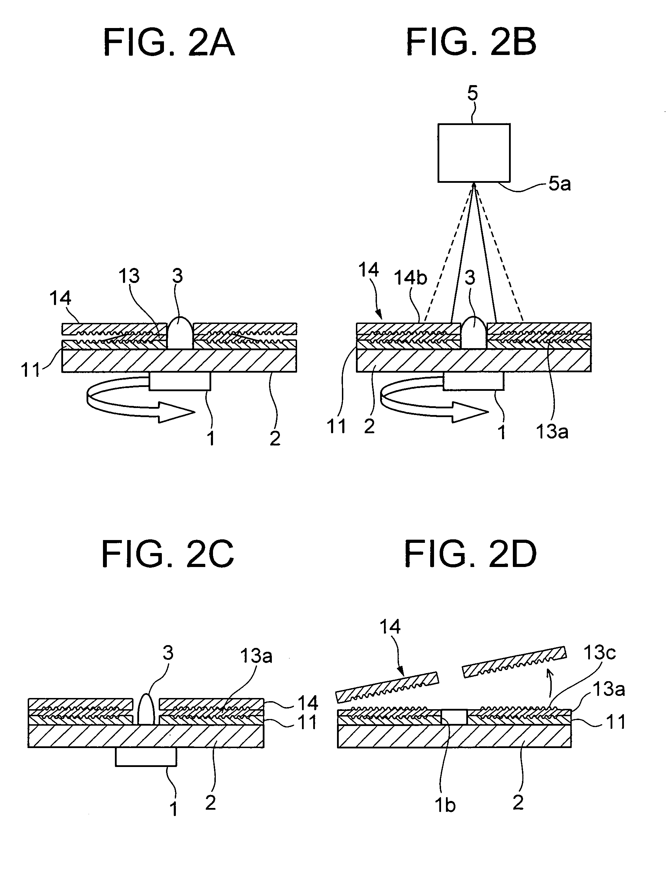

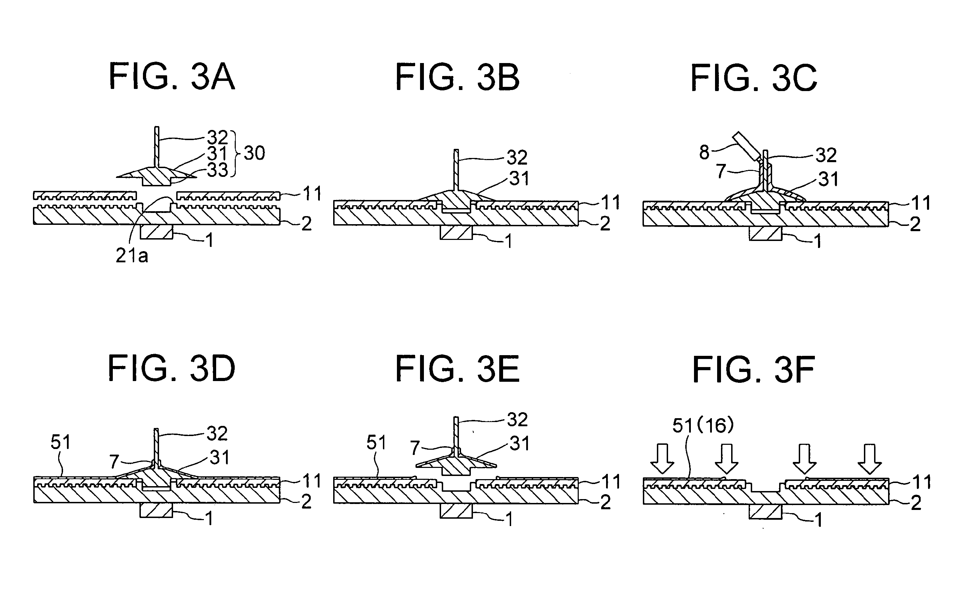

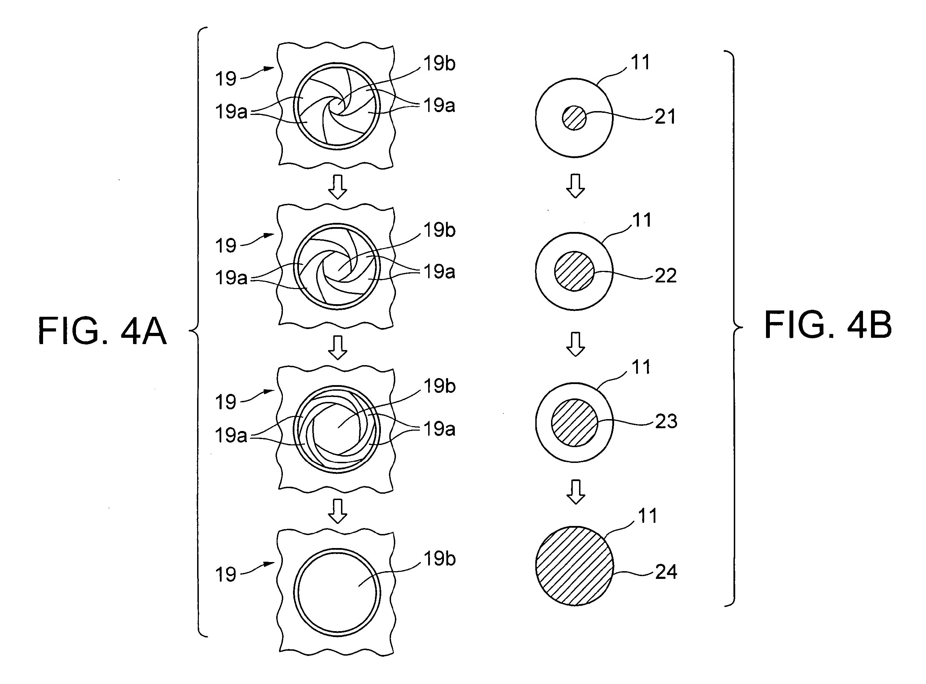

FIGS. 1A to 1C are side sectional views each showing a process of manufacturing a 2-layered optical disc in the present embodiment. FIGS. 2A to 2D are side sectional views showing processes of manufacturing the 2-layered optical disc, which are executed subsequently to the process in FIG. 1C. FIGS. 3A to 3F are side sectional views showing processes of manufacturing the 2-layered optical disc, which are executed subsequently to the process in FIG. 2D. FIG. 4A is a plan view showing a variation of a diaphragm aperture of a diaphragm mechanism provided in an ultraviolet light source in FIG. 2B. FIG. 4B is a plan view showing irradiation ranges of ultraviolet rays emitted via respective diaphragm apertures of the diaphragm mechanism.

The present embodiment exemplifies a method of manufacturing a single-sided 2-layered type optical disc. To be specific, as shown in FIG. 1A, a stage 2 for spin-coating is so constructed as to be rotated by a motor (unillustrated) through a rotary shaft 1. An elastic deformation retaining member 3 made of an elastically deformable material for holding a disc-shaped substrate 11, is fixed to a central portion of a top surface of the stage 2. Further, the disc-shaped substrate 11 includes an information layer formed over a recording face 12 formed with a recording/reproducing rugged portion 11a, and has a central hole 11b.

As shown in FIG. 1A, the elastic deformation retaining member 3 tapered off with its elastic deformation receives insertion of the disc-shaped substrate 11 via the central hole 11b. Thereafter, the elastic deformation retaining member 3 is elastically restored in directions of arrowheads in FIG. 1A, whereby the disc-shaped substrate 11 is tightly secured to and retained by the elastic deformation retaining member 3 at the central hole 11b and is thus fixed to the stage 2.

Next, as shown in FIG. 1B, an ultraviolet curing resin is discharged over the vicinity of a boundary between the central hole 11b of the disc-shaped substrate 11 and the elastic deformation retaining member 3 from a nozzle 4 in a way that rotates the stage 2 by the motor (unillustrated) through the rotary shaft 1, thus coating the ultraviolet curing resin 13 over the vicinity of an inner periphery of the disc-shaped substrate 11.

Subsequently, as shown in FIG. 1C, a translucent stamper member 14 including a transfer face 15 formed with a recording/reproducing rugged portion 14a is aligned with the central hole 11b of the disc-shaped substrate 11 and is thus superimposed on the disc-shaped substrate 11 so as to receive insertion of the elastic deformation retaining member 3.

The stamper member 14 is made of an olefin resin, etc. that exhibits transmissivity of ultraviolet-rays and has an easy-to-exfoliate property with respect to the ultraviolet curing resin material, and is disposed so that the transfer face 15 thereof faces the recording face 12 of the disc-shaped substrate 11. Note that the stamper member 14 may have the same diameter as the disc-shaped substrate 11 has, however, its diameter is preferably larger than the disc-shaped substrate 11 in order to ensure a gripping area in consideration of the easy-to-exfoliate property.

Next, the stage 2 is rotated together with the rotary shaft 1, thereby rotating the disc-shaped substrate 11 and the stamper member 14 as shown in FIG. 2A. Then, the ultraviolet curing resin 13 is forced to be directed to the outer periphery side with a centrifugal force and is thereby spun off the outer peripheral edge between the recording face 12 and the transfer face 15, thus effecting the spin-coating. Next, as shown in FIG. 2B, a top face 14b of the stamper member 14 is irradiated with ultraviolet-rays emitted from an ultraviolet light source 5 in a way that rotates the disc-shaped substrate 11 on the rotating stage 2.

The ultraviolet light source 5 includes a diaphragm mechanism 19 shown in FIG. 4A, which is provided on a light exit face 5a shown in FIG. 2B. In the diaphragm mechanism 19, a plurality of diaphragm blades 19a thereof are actuated, whereby a diameter of a diaphragm aperture 19b can be changed from large to small as viewed from an upper part down to a lower part in FIG. 4A. With these changes in the diameter of this diaphragm aperture 19b, the irradiation range of the ultraviolet rays upon the disk-shaped substrate 11 changes from the upper part down to the lower part in FIG. 4B, i.e., in the sequence such as a small range 21 defined by an inner periphery, intermediate ranges 22 and 23 each defined by an intermediate periphery and a large range 24 defined by an outer periphery.

When irradiated with the ultraviolet rays in FIG. 2B, the ultraviolet curing resin is spun off the outer peripheral edge at a high speed for spin-coating, and the irradiation of the ultraviolet rays is effected in a pattern shown in FIG. 7B. To be specific, the irradiation range of the ultraviolet rays is set to the small range 21 shown in FIG. 4B while remaining rotated at the high speed, and the irradiation of the ultraviolet rays is conducted for considerably a short period of time in an area A shown in FIG. 7B. Next, as shown in FIG. 4B, the intermediate ranges 22 and 23 are irradiated with the ultraviolet rays for comparatively a short period of time in areas B and C in a way that decreases the number of revolutions. Subsequently, a circular area extending from the intermediate range 23 up to the large range 24 for comparatively a long period of time in an area D in a state where the number of revolutions is set considerably low.

The ultraviolet curing resin 13 interposed between the recording face 12 of the disc-shaped substrate 11 and the transfer face 15 of the stamper member 14 is irradiated with the ultraviolet rays as described above and is thus cured, thereby forming a spacer layer 13a having a layer thickness (film thickness) of 25 µm. The spin-coating and the ultraviolet curing process are, however, executed in a pattern shown in FIG. 7B, thereby obtaining a film thickness distribution, as shown in FIG. 7A, corresponding to the areas A through D in FIG. 7B. This is the film thickness distribution of the spacer 13a, wherein the film thickness of an inner peripheral part to an outer peripheral part thereof is on the order of 25±1 µm that is uniform enough to restrain unevenness of the thickness.

To describe it more specifically, after spinning for 11 sec at the number of revolutions of 4,000 rpm, a shutter is driven to a diameter of 68 mm in 0.1 sec, wherein the irradiation of the ultraviolet rays is started. Subsequently, the number of revolutions of 4,000 rpm is maintained for 0.3 sec and is thereafter reduced down to 3,200 rpm in 0.3 sec, and this number of revolutions is kept for 0.3 sec. Meanwhile, the shutter is driven up to a diameter of 84 mm in 0.5 sec, and this state is kept for 0.1 sec. Then, the number of revolutions is reduced from 3,200 rpm down to 150 rpm in 0.3 sec, and this number of revolutions is maintained for 0.1 sec. During this period of time, the shutter is driven up to a diameter of 96 mm from 86 mm in 0.1 sec, and this state is kept for 0.5 sec. Then, the number of revolutions is increased up to 4,000 rpm from 150 rpm in 0.3 sec, and this number of revolutions is maintained for 8.5 sec. Thus, a swelling is prevented from being formed on the outermost peripheral portion by sharply increasing the number of revolutions. In the meantime, the shutter is driven up to a diameter of 116 mm from 96 mm in 8 sec, wherein a range corresponding to this diameter is irradiated with the ultraviolet rays for 1 sec. Note that the ultraviolet light source has consecutively irradiated the range from the diameter of 68 mm up to 116 mm throughout with the ultraviolet rays.

Next, as shown in FIG. 2C, the elastic deformation retaining member 3 gets elastically deformed in an arrowhead direction, and the disc-shaped substrate 11 is removed via the central hole 11b. Subsequently, as shown in FIG. 2D, the stamper member 14 is exfoliated while the spacer layer 13a is left on the side of the disc-shaped substrate 11. With the exfoliation of the stamper 14, as shown in FIG. 2D, the recording face 13c onto which the rugged portion 14a of the transfer face 15 of the stamper 14 is transferred, appears on the surface of the spacer layer 13a.

Next, after forming an information layer as a second layer on the recording face 13c of the spacer layer 13a, a translucent layer 16 is formed of a resin material over the space layer 13a by a spin coat method. The way of how the translucent layer 16 is formed by the spin-coating will be explained with reference to FIGS. 3A to 3F. It is preferable that a method previously proposed in Japanese Patent Application Laid-Open Publication No.2001-351275 by one of the inventors of the present application together with other inventors, be applied to forming the translucent layer by the spin-coating.

As shown in FIG. 3A, the disc-shaped substrate 11 formed with the spacer layer 13a in FIG. 2D is placed on the rotary stage 2. An annular protrusion 21 of the rotary stage 2 receives insertion of the central hole 11b, thereby fixing the disc-shaped substrate 11. Next, as shown in FIG. 3B, the central hole 11b is blocked by a blocking member 30. The blocking member 30 includes, as shown in FIG. 3A, a disk portion 31 for blocking the central hole 11b, a support spindle 32 integrally provided at its center, and a protruded portion 33 integral with the disk portion 31 on the side that faces the central hole 11b. The protruded portion 33 is fitted in an inner peripheral portion of the protrusion 21, thereby fixing the blocking member 30 to the rotary stage 2 and positioning the disc-shaped substrate 11 and the blocking member 30.

Next, as shown in FIG. 3C, a resin liquid 7 is discharged from a nozzle 8 and is supplied to over an outer peripheral surface of the support spindle 32. At this time, the rotary stage 2 is rotated at comparatively a low speed, preferably at 20 through 100 rpm, whereby the resin liquid is made to spread uniformly over the disk portion 31. Note that the resin material described above is not limited to those particular, and, for example, the ultraviolet curing resin and a thermosetting resin are usable, however, the former ultraviolet curing resin is preferable.

Next, as shown in FIG. 3D, the rotary stage 2 is rotated at comparatively a high speed, thereby spin-coating the resin liquid 7 over the outer periphery from the inner periphery. A resin layer 51 is thus formed on the spacer layer 13a of the disc-shaped substrate 11.

The number of revolutions and revolution time for the spin-coating of the resin liquid can be properly determined depending on a thickness of the resin layer 51 to be formed and on a viscosity of the resin liquid. In the case of forming the translucent layer of which a thickness is on the order of 30 through 300 µm, it is preferable that the viscosity of the resin liquid is selected from a range of 100 cP through 100,000 cP, the number of revolutions is selected from a range of 500 rpm through 6,000 rpm, and the revolution time is chosen from a range of 2 sec through 30 sec, respectively.

Next, as shown in FIG. 3E, the blocking member 30 is separated from the disc-shaped substrate 11. Then, when the resin liquid for use contains the ultraviolet curing resin, the resin layer 51 is irradiated with the ultraviolet rays and thus cured, thereby forming the translucent layer 16 on the spacer layer 13a as shown in FIG. 3F. The translucent layer 16 can be easily formed up to a thickness of 75 µm by adjusting, for instance, the number of revolutions and the revolution time for the spin-coating described above, wherein the film thickness distribution is within a range of ±1 µm.

As explained above, the recording face 12 is formed between the disc-shaped substrate 11 and the spacer layer 13a, and another recording face 13c is formed between the spacer layer 13a and the translucent layer 16, whereby the single-sided 2-layered type optical disc can be manufactured. In this type of optical disc, the spacer layer 13a has a film thickness distribution of 25±1 µm, the translucent layer 16 has a film (layer) thickness distribution of 75±1 µm, and it is possible to attain a film thickness distribution of 100±2 µm of a total film thickness of the spacer layer 13a plus the translucent layer 16.

Hence, the manufacturing method according to the present embodiment is applied to manufacturing, for example, a Blu-ray disc containing the single-sided two or more information layers, whereby the film thickness distribution of the spacer layer plus the translucent layer can be within ±2 µm and the recording/reproducing process can be therefore performed without any troubles.

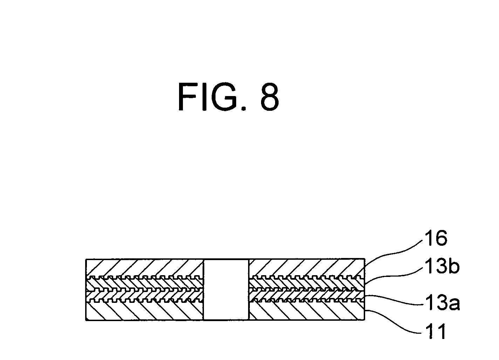

Further, in the case of manufacturing the optical disc including two spacer layers by further forming another spacer layer on the spacer layer 13a in FIG. 2D, a second spacer layer 13b is formed on the spacer layer 13a as shown in FIG. 8 by repeatedly executing the respective processes in FIGS. 1A to 2D, and thereafter the translucent layer 16 is formed in the same way as FIGS. 3A to 3F shows. The optical disc including three recording faces as shown in FIG. 8 can be thereby manufactured. According to the optical disc in FIG. 8, the film thickness distribution of the spacer layer plus the translucent layer can be within ±2 µm, and hence the recording/reproducing process can be performed without any troubles.

Note that compositions of the ultraviolet curing resin used for forming the spacer layers shown in FIGS. 5A to 7B are given as follows.
- Kayaradd R-167 (made by Nippon Kayaku Co., Ltd.): 60 mass part (ECH denatured 1, 6-hexanedioldiacrylate)
- Aronix M-309 (made by Toagosei Co., Ltd.): 30 mass part (trimethylolpropaneacrylate)
- THF-A (Kyoueisha Chemical Co., Ltd.): 10 mass part (tetrahydrofurfurylacrylate)
- Irugacure184(Chiba Special Chemicals Co., Ltd.): 3 mass part (1-hydroxycichlohexylphenylketone)
   Viscosity: Approximately 700 mPa·s

Further, the following are materials usable in the mixtures given above.

### Monofunctional:

Allyl (meta)acrylate, benzyl (meta)acrylate, butoxy-(meta)acrylate, butadiol (meta)acrylate, butoxy-triethylene glycotu (meta)acrylate, ECH denatured butyl (meta)acrylate, t-butylaminoethyl (meta)acrylate, caprolactone (meta)acrylate, 2-cyanoethyl (meta)acrylate, cyclohexyl (meta)acrylate, dicyclopentanyl (meta)acrylate, alicyclic denatured neopentylglycol (meta)acrylate, 2,3-dibromopropyl (meta)acrylate, dicyclopentenyl (meta)acrylate, dicyclopentenyloxy (meta)acrylate, N, N-diethylaminoethyl (meta)acrylate, 2-ethoxyethyl (meta)acrylate, 2-ethylhexyl (meta)acrylate, glycerol (meta)acrylate, glycidyl (meta)acrylate, heptadecaphlorodecyl (meta)acrylate, 2-hydroxyethyl (meta)acrylate, caprolactone denatured 2-2-hydroxyethyl (meta)acrylate, 2-2-hydroxypropyl (meta)acrylate, isobornyl (meta)acrylate, isodecyl (meta)acrylate, isooctyl (meta)acrylate, lauryl (meta)acrylate, methoxydietyleneglycol (meta)acrylate, methoxydipropyleneuricol (meta)acrylate, morpholine (meta)acrylate, phenoxyethyl (meta)acrylate, phenoxyhydroxypropyl (meta)acrylate, EO denatured phenoxide phosphoric acid (meta)acrylate, phynyl (meta)acrylate, EO denatured phosphoric acid (meta)acrylate, EO denatured phosphoric acid (meta)acrylate, phthalic acid (meta)acrylate, polyethylene glycol 200 (meta)acrylate, polyethylene glycol 400 (meta)acrylate, polyethylene glycol 600 (meta)acrylate, stearyl (meta)acrylate, EO denatured succinate (meta)acrylate, tetraphloroprophyl (meta)acrylate, tetrahydrofurfuryl (meta)acrylate, vinyl acetate, and N-vinylcaprolactam.

### Multifunctional:

(Meta) acrylide isocyanurate, bis (acryloxyneopentyl glycol) adipate, EO denatured bis phenol A di (meta)acrylate, EO denatured bis phenol S di (meta)acrylate, EO denatured bis phenol F di (meta)acrylate, 1, 4-butanediol di (meta)acrylate, 1, 3-butylene glycol di (meta)acrylate, dicyclopentanyl di (meta)acrylate, diethylene glycol (meta)acrylate, dipenta erythritol hexa (meta)acrylate, dipenta erythritolmonohydroxy penta (meta)acrylate, alkyl denatured dipenta erythritol penta (meta)acrylate, alkyl denatured dipenta erythritol tetra (meta)acrylate, alkyl denatured dipenta erythritol tri (meta)acrylate, caprolactone denatured dipenta erythritol hexa (meta)acrylate, ditrimethylol propane tetra (meta)acrylate, ethylene glycol di (meta)acrylate, ECH denatured glycerol tri (meta)acrylate, 1, 6-hexanediol di (meta)acrylate, long chain aliphatic series di (meta)acrylate, methoxide cyclohexyl di (meta)acrylate, neopentyl glycol di (meta)acrylate, hydroxy pivalate neopentyl glycol di (meta)acrylate, pentaerythritol tri (meta)acrylate, pentaerythritol tetra (meta)acrylate, stearic acid denatured pentaerythritol di (meta)acrylate, EO denatured phosphoric acid di (meta)acrylate, polyethylene glycol di (meta)acrylate, polypropylene glycol di (meta)acrylate, tetraethylene glycol di (meta)acrylate, triethylene glycol di (meta)acrylate, trimethylolpropane tri (meta)acrylate, EO denatured trimethylolpropane tri (meta)acrylate, PO denatured trimethylolpropane tri (meta)acrylate, tris (meta)achroxyethyl isocyanurate, caprolactone denatured tris (meta)achroxyethyl isocyanurate
monofunctional, and multifunctional monomer. The composition can be composed by properly selecting and
mixing those materials in accordance with performance required.

Further, oligomer may also be added thereto in terms of adjusting the viscosity and improving the property. Moreover, the curing composition may be, when used, if within a range that does not deteriorate the performance thereof, as the necessity may arise, properly mixed with known additives such as thermoplastic high polymer, a slip agent, a leveling agent, an antioxidant, an ultraviolet absorbent, a polymerization inhibitor, a silane coupling agent, an inorganic filler, an organic filler, an inorganic filler subjected to a surface organizing treatment, and so on.

### Reaction Initiator:

When a wavelength of the laser beam used for reading the optical disc is within a range of, e.g., 380 nm through 500 nm, it is preferable to properly use a light polymerization initiator by properly select a type and a usage amount of this initiator so that a light transmissive layer sufficiently transmits the laser beam required for reading. In this case, it is particularly preferable to employ such a short wavelength photosensitive light polymerization initiator that the light transmissive layer obtained does not absorb blue-violet laser beams.

Given as specific examples of the short wavelength photosensitive light polymerization initiator are, for instance, benzophenone, 2, 4, 6-trimethyl benzophenone, methylorthobenzoyl benzoate, 4-phenyl benzophenone, diethoxyacetophenone, 2-hydroxy-2methyl-1-phenylpropaci-1-one, benzyldimethylketal, 1-hydroxycyclohexyl-phenylketone, benzoin methylether, benzoin ethylether, benzoin isoprophylether, benzoin isobutylether, methylbenzoilformate, and so forth. These materials can be used as one single body or a combination of two or more materials.

Further, in the composition of the ultraviolet curing resin to be used, the usage amount of the light polymerization initiator is not particularly limited, however, it is preferable to add the light polymerization initiator within a range of 0.0001 through 5 mass part for 100 mass part as a total amount of the resin component. It is also preferable that the usage amount thereof is equal to or larger than 0.001 mass part in terms of the curing property, and a range of being equal to or smaller than 3 mass part is more preferable in terms of a deep portion curing property and hard xanthic denaturation.

Moreover, Core9930a made by cores Co., Ltd. was used as a measuring device for measuring the film thickness of the resin, wherein the film thickness was measured at 1140 points at an interval of 2 mm in a range of 22 mm through 58 mm in the radial direction and at an interval of 6 degrees in the peripheral direction. A measurement principle of this measuring device is a method of acquiring the film thickness by calculation from a deviation amount between a surface reflection and an undersurface reflection.

The best mode for carrying out the present invention has been discussed so far, however, the present invention is not limited to what has been described above and can be modified in a variety of forms within the scope of the technical concept of the present invention. For example, the optical discs including three or more spacer layers can be similarly manufactured by the manufacturing method of the present invention. Further, electron beams, etc. other than the ultraviolet rays may also be available as the energy beams according to the present invention.

Note that the [information layer] includes other categories of layers such as the recording layer and a reflection layer, a dielectric layer and so forth. The recording layer is made of a phase-change material, a magneto-optic material and so on in the case of a rewritable recording medium (Re-writable), and is made of the phase-change material and an organic material in the case of a write-once read-many recording medium (Recordable). Moreover, in the case of a read-only medium (ROM (Read Only Memory)), a reflection layer provided on the rugged portion (pits) formed on the substrate or on the resin serves as the information layer.

## Claims

1. A method of manufacturing a disc-shaped recording medium, comprising:
a step of applying an energy beam curing resin to an inner peripheral portion of a first information layer formed on a disc-shaped substrate, and thereafter disposing a stamper member having a transfer face so that said stamper member faces said disc-shaped substrate;
a step of rotating said disc-shaped substrate in order to spin-coat said energy beam curing resin between said disc-shaped substrate and said stamper member;
a step of irradiating said energy beam curing resin with an energy beam while rotating said disc-shaped substrate so as to expand an irradiation range toward an outer peripheral side from an inner peripheral side of said disc-shaped substrate;
a step of removing said stamper member in a way that leaves, on said disc-shaped substrate, a spacer layer made of said energy beam curing resin with the irradiation of the energy beam;
a step of forming a second information layer on the surface of said spacer layer transferred from said transfer face of said stamper member; and
a step of forming a light transmissive layer on said second information layer on said spacer layer,
wherein said energy beam irradiating step involves keeping the number of revolutions with which said energy beam curing resin comes to have a predetermined film thickness on the inner peripheral side on said disc-shaped substrate, then starting the irradiation of the energy beam, and thereafter changing stepwise the number of revolutions and the irradiation range.

2. A method of manufacturing a disc-shaped recording medium, comprising:
a first step of applying an energy beam curing resin to an inner peripheral portion of a first information layer formed on a disc-shaped substrate, and thereafter disposing a stamper member having a transfer face so that said stamper member faces said disc-shaped substrate;
a second step of rotating said disc-shaped substrate in order to spin-coat said energy beam curing resin between said disc-shaped substrate and said stamper member;
a third step of irradiating said energy beam curing resin with an energy beam while rotating said disc-shaped substrate so as to expand an irradiation range toward an outer peripheral side from an inner peripheral side of said disc-shaped substrate;
a fourth step of removing said stamper member in a way that leaves, on said disc-shaped substrate, a spacer layer made of said energy beam curing resin with the irradiation of the energy beam; and
a fifth step of forming a second information layer on the surface of said spacer layer transferred from said transfer face of said stamper member,
wherein three or more information layers are formed by repeatedly executing said first step through said fifth step so that a second spacer layer is formed of said energy beam curing resin between said first spacer layer transferred from said transfer face of said first stamper member and a second stamper member, and
said energy beam irradiating step involves keeping the number of revolutions with which said energy beam curing resin comes to have a predetermined film thickness on the inner peripheral side on said disc-shaped substrate, then starting the irradiation of the energy beam, and thereafter changing stepwise the number of revolutions and the irradiation range.

3. A method of manufacturing a disc-shaped recording medium according to claim 2, wherein an information layer is formed on the surface of said spacer layer formed on an outermost side, and thereafter a light transmissive layer is formed on said information layer.

4. A method of manufacturing a disc-shaped recording medium according to claim 1 or 2, wherein said energy beam irradiating step involves keeping the number of revolutions with which said energy beam curing resin comes to have a predetermined film thickness on the inner peripheral side on said disc-shaped substrate, then starting the irradiation of the energy beam, and increasing the number of revolutions after temporarily decreasing the kept number of revolutions while changing the irradiation range of the energy beam.

5. A method of manufacturing a disc-shaped recording medium according to claim 1 or 2, wherein a relationship between the number of revolutions and the film thickness of said energy beam curing resin in a radial direction which is irradiated with the energy beam, is previously obtained, and the number of revolutions in the irradiation range in the radial direction is changed based on this relationship.

6. A method of manufacturing a disc-shaped recording medium according to claim 5, wherein the number of revolutions is decreased when the irradiation range in the radial direction exists on an outer peripheral side.

7. A method of manufacturing a disc-shaped recording medium according to claim 5, wherein the number of revolutions is decreased when the irradiation range in the radial direction exists on an outer peripheral side, and is thereafter increased again.
